# EUROPÄISCHE PATENTANMELDUNG

(11) **EP 0 845 589 A1**
(43) Veröffentlichungstag der Anmeldung: **03.06.1998**
(21) Anmeldenummer: 97120409.4
(22) Anmeldetag: 21.11.1997
(51) Int. Cl.: F02F 3/26, F02B 23/06

(54) **Dieselmotor mit Direkteinspritzung und einer Kolbenmulde**

(30) Priorität: 27.11.1996 DE 19649052
(71) Anmelder: MTU MOTOREN- UND TURBINEN-UNION FRIEDRICHSHAFEN GMBH, D-88040 Friedrichshafen (DE)
(72) Erfinder: Danckert, Bernd, Dipl.-Ing., 88074 Meckenbeuren (DE); Dorner, Walter, 88677 Markdorf (DE); Donauer, Georg, 88048 Friedrichshafen (DE); Velji, Amin, Dr.-Ing., 30655 Hannover (DE)

(57) **Zusammenfassung**

Zur Reduzierung der Schadstoffemissionen, insbesondere Partikel- und Stickoxidemissionen, bei einem Dieselmotor mit drallarmer luftverteilender Direkteinspritzung über ein Druckspeicher-Einspritzsystem (Common-Rail) in einen flachen Brennraum (11), wird eine Kolbenmulde (18) vorgeschlagen, die vom Muldengrund (24) aus zur Planfläche (26) des Kolbenbodens (21) hin divergent ausgebildet ist und deren kreisförmige Eintrittsöffnungsfläche (40) einen Durchmesser (DM) aufweist, der mindestens dem 0,8-fachen des Kolbendurchmessers (DK) entspricht. Am Muldenrand ist eine zur Kolbenmulde (18) koaxial angeordnete Diffusorausnehmung(27) vorgesehen, die ausgehend von einem im Abstand (28) unterhalb der Planfläche (26) des Kolbenbodens (21) ausgebildeten abgerundeten Übergang (9) der Umfangswand (25) mit zunehmendem Muldendurchmesser (DM) zur Planfläche (26) des Kolbenbodens (21) hin ansteigt.

Die erfindungsgemäße Kolbenmulde verhält sich während der Kompression und der Verbrennung strömungsmechanisch neutral und schafft damit die Voraussetzungen für eine weitgehend vom Kennfeld des Dieselmotors unabhängige Steuerung der Einspritzung bzw. der Gemischbildung über das frei regelbare Druckspeicher-Einspritzsystems (Common-Rail) und dadurch für einen Brennverlauf mit erheblich reduziertem Schadstoffausstoß des Dieselmotors.

## Beschreibung

Die Erfindung betrifft einen Dieselmotor mit drallarmer luftverteilender Direkteinspritzung und einem flach ausgebildeten Brennraum gemäß dem Oberbegriff des Patentanspruchs 1.

Von einem hochaufgeladenen Dieselmotor (MTZ, Motortechnische Zeitschrift, Heft 6, 1996, Seiten 336 - 340) der eingangs genannten Art, ist es bekannt, daß durch den Übergang auf ein drallarmes Diesel-Gemischbildungs- bzw. Brennverfahren in Kombination mit einem leistungsfähigen Einspritzsystem ein deutlich günstigerer Kompromiß hinsichtlich Kraftstoffverbrauch und Stickoxid- bzw. Partikelausstoß erreicht wird. Eine Reduzierung der Zylinderladungsbewegung wird dort durch Absenken des Einlaßdrallniveaus sowie Aufweiten des Kolbenmuldendurchmessers erreicht, während eine gleichzeitige Verbesserung der Kraftstoffzerstäubungsgüte durch Anheben des Einspritzdrucks auf über 1000 bar den für die Dieselgemischbildung notwendigen Massentransport bewerkstelligt. Ferner wurde im Hinblick auf zukünftige Untersuchungen darauf hingewiesen, daß durch die Steigerung der Leistungsfähigkeit des Einspritzsystems bei gleichzeitiger weiteren Absenkung des Einlaßdrallniveaus eine positive Wirkung auf den Partikel-/Stickoxid-Zielkonflikt erwartet wird. Versuche der Anmelderin haben jedoch gezeigt, daß bei dem bekannten Dieselmotor mit offener Brennraummulde besonders im oberen Leistungsbereich der Schadstoffausstoß nicht zufriedenstellende Werte erreicht.

Der Erfindung liegt die Aufgabe zugrunde, einen gattungsgemäßen Dieselmotor derart weiterzubilden, daß eine zusätzliche Reduzierung der Schadstoffemissionen, insbesondere Partikel- und Stickoxidemission, durch Verbesserung der Gemischbildung bei Brennverfahren mit vorwiegender Luftverteilung, unter Beibehalten eines hohen Wirkungsgrades erreicht wird.

Erfindungsgemäß wird diese Aufgabe durch die Gesamtheit der Merkmale des Anspruchs 1 gelöst. Vorteilhafte Weiterbildungen der Erfindung sind durch die Unteransprüche gekennzeichnet.

Dabei bestehen die mit der erfindungsgemäßen Ausgestaltung der weiten divergenten Kolbenmulde bei einem Dieselmotor mit einem Kraftstoffversorgungssystem hoher hydraulischer Leistungsfähigkeit erzielten Vorteile in einer deutlich verbesserten Lufterfassung und einer wesentlichen Beruhigung der Zylinderladung. Beides begünstigt eine optimale Durchmischung des Kraftstoffs mit der gesamten Luft im Brennraum durch die kinetische Energie der Kraftstoffeinspritzstrahlen und verringert so die Abgasemissionen, insbesondere den Partikelausstoß und die Stickoxidanteile, erheblich.

Durch die Form der zur Planfläche des Kolbenbodens hin divergenten Kolbenmulde mit der am Kolbenrand ausgebildeten Diffusorausnehmung wird der Anteil bisher nicht zur drallarmen Gemischbildung nutzbarer Brennraumbereiche minimiert. Die Kolbenmulde ist dadurch an die Lage und Kontur der sich bei den jeweils vorherrschenden Einspritzbedingungen durch das Kraftstoffeinspritzsystem und die Einspritzmimik bei Vollast gebildeten Einspritzstrahlkegel mit großen Strahllängen in einer Weise angepaßt, die ein direktes Benetzen der Kolbenmulde verhindert. Über diese erfindungsgemäß geschaffenen großen freien Strahllängen durchdringen die hochenergetischen Einspritzstrahlen den Brennraum. Mit zunehmender Strahlausbreitung entzündet sich der fein zerstäubte Kraftstoffnebel, wobei die divergente Muldenform und speziell die mit zunehmendem Durchmesser ansteigende Diffusorausnehmung die Flammenausbreitung in radial außen liegende Brennraumbereiche bei Annäherung des Kolbens an die obere Totpunktstellung und während der Kolbenabwärtsbewegung im Expansionstakt begünstigt.

Die Aufweitung des Muldendurchmessers an der Kolbenmuldeneintrittsfläche auf mindestens das 0,8-fache des Kolbendurchmessers trägt neben der verbesserten Lufterfassung zu einer bedeutenden Reduzierung des strömungsmechanischen Einflusses der Kolbenhubbewegung auf die Gemischbildung bei. Durch den damit auf maximal das 0,2-fache des Kolbendurchmessers festgelegten sogenannten Kolbensteg ist der verbleibende Planflächenanteil des Kolbenbodens auf ein bedeutungsloses Maß reduziert. Der im verbleibenden Minimalquetschspalt zwischen dem Kolbensteg und dem Zylinderkopfboden während der Aufwärtsbewegung des Kolbens erzeugte, zur Kolbenmuldenmitte orientierte Strömungsimpuls ist soweit abgesenkt, daß davon keine Quetschströmung mehr aufgebaut wird, die der Einspritzstrahlausbreitung entgegengerichtet wirkt. Eine Behinderung der Strahl- und/oder Flammausbreitung bedingt durch ein Abbremsen der Strahlen in radialer Richtung, was zu einer örtlichen Kraftstoffanhäufung und erhöhtem Partikelausstoß führt, wird vermieden.

Der vom Rest-Quetschspalt ausgehende Strömungsimpuls wird ferner über die radiale Strecke der zur Mulde hin abfallenden Diffusorausnehmung und im Zusammenwirken mit einem strömungsgänstig gewählten Radius des Übergangs zur Umfangswand der Kolbenmulde soweit abgebaut, daß die bisher im Bereich des scharftkantigen Randes einer herkömmlichen Kolbenmulde in der Vertikalebene gebildeten Wirbelgebiete bedeutend reduziert werden. Deshalb zeichnet sich die erfindungsgemäße Kolbenmulde durch schwache wandnahe Wirbelgebiete aus und verhindert auf diese Weise Kraftstoffniederschlag auf der Wand der Kolbenmulde und dem Muldengrund. Dies sind Vorteile, die insbesondere im oberen Leistungsbereich des Dieselmotors ein Ansteigen des Rußpartikelausstoßes verhindern.

Schließlich bietet die erfindungsgemäße Gestalt der Kolbenmulde neben dem Abbau von durch die Kolbenbodengestaltung bedingten Ladungsturbulenzen den Vorteil einer über den Kompressionstakt und die gesamte Dauer der Kraftstoffeinspritzung gleichförmigen Drehbewegung der Zylinderladung in der Kolbenmulde. Insbesondere findet auch bei Annäherung des Kolbens an seine obere Totpunktstellung keine Drallüberhöhung statt. Vielmehr stellt sich in der Mulde über die gesamte Einspritzdauer eine geordnete Luftbewegung mit konstanter Winkelgeschwindigkeit ein, die in Form einer Festkörper-Drehströmung jeweils den gesamten Brennraumsektor zwischen benachbarten Einspritzstrahlen überstreicht und so ein Ineinanderwehen der Einspritzstrahlen verhindert.

Eine zusätzliche Beruhigung der Zylinderladung schafft die erfindungsgemäße Gestaltung der Kolbenmulde bei Dieselmotoren mit im Kolbenboden ausgebildeten Ventiltaschen. Durch die divergente Umfangswand und die Diffüsorausnehmung der aufgeweiteten Kolbenmulde verbleiben lediglich segmentförmige Ventiltaschenanteile im äußeren Rand des Kolbenbodens. Diese bilden in Abhängigkeit der Tiefe der Diffusorausnehmung bzw. von dem Abstand des Übergangs von der Umfangswand in die Diffusorausnehmung zur Planfläche des Kolbens sowie deren Neigungsverlauf deutlich weniger Verschneidungskanten und Flächenanteile aus als herkömmliche Kolbenmulden. Dadurch werden der einströmenden Ladeluft bedeutend weniger Turbulenzen aufgeprägt, die als wandnahe Wirbelgebiete im Bereich dieser Kanten zu lokalen Kraftstoffanhäufüngen führen und die dann unter erhöhter Ruß- und Hitzeentwicklung verbrennen.

Ferner schaffen die auf kleinere Muldensektoren reduzierten Ventiltaschenanteile der erfindungsgemäßen Muldengestalt günstige Voraussetzungen für die Verwendung einer Einspritzdüse mit mehr als sechs Einspritzbohrungen zur Intensivierung der Gemischbildung. Insbesondere kann durch den Einsatz einer Neun-Lochdüse eine besonders hohe Strahlzerstäubungsgüte erzielt werden.

Bei einer bevorzugten Ausführungsform der Kolbenmulde ist der Übergang der Umfangswand in die Diffusorausnehmung in einem Abstand zur Planfläche des Kolbenbodens ausgebildet, der der erforderlichen Tiefe der Ventiltaschen entspricht. Die segmentförmigen Ventiltaschen gehen dabei harmonisch in den Radius des Übergangs über und verlaufen so ohne Ausbildung einer senkrecht zur Strahl- bzw. Flammenausbreitung liegenden Kante in die Kolbenmulde. Strömungsturbulenzen sowie die Bildung von Hitzerissen in diesem Bereich infolge thermischer Überbeanspruchung werden vermieden.

Durch das von der Kolbenbewegung bzw. Kolbenstellung weitgehend unabhängige neutrale Verhalten der erfindungsgemäßen Kolbenmulde auf die Stömungsverhältnisse der Zylinderladung im Brennraum wird bei dem drallarmen Brennverfahren eine verbrauchs- und partikelgünstigere Steuerung des Verbrennungsablaufs über das Einspritzsystem erreicht. Insbesondere bei Verwendung eines Druckspeicher-Einspritzsystems, wie z.B. dem Common-Rail-System, kann im Zusammenwirken mit der erfindungsgemäßen Kolbenmulde eine NOx-optimierte Einspritzmengenmodulierung dargestellt werden, während eine optimale Diesel-Gemischbildung durch den unabhänig von der Motordrehzahl im Druckspeicher kontinuierlich verfügbaren Einspritzdruck unter Ausnutzung der kinetischen Energie der Einspritzstrahlen sichergestellt ist.

Nachfolgend ist die Erfindung anhand eines in der Zeichnung dargestellten Ausführungsbeispiels genauer beschrieben. Es zeigt:
- Figur 1,: die Kolben-Zylinder-Anordnung des erfindungsgemäßen Dieselmotors mit einem Druckspeicher-Einspritzsystem;
- Figur 2,: den erfindungsgemäßen Kolbenboden mit Einspritzstrahlmuster in Draufsicht;
- Figur 3,: eine Schnittansicht des Kolbenbodens entlang des Schnittverlaufs III-III in Figur 2.

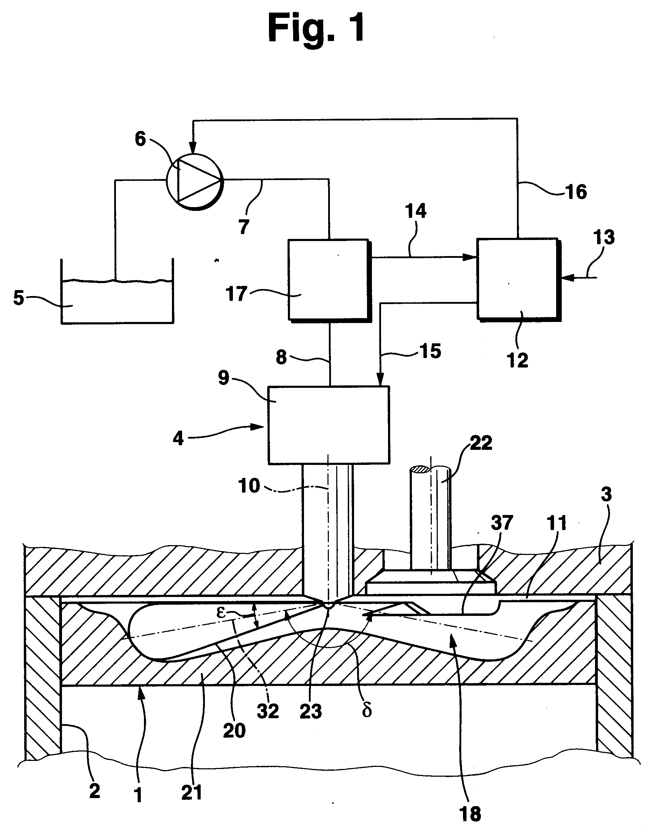

Bei dem in Figur 1 dargestellten Dieselmotor wird ein flacher Brennraum 11 durch einen Zylinder 2, durch den Kolbenboden 21 eines im Zylinder 2 verschieblich angeordneten Kolbens 1 sowie einem ebenen Zylinderkoplboden 3 begrenzt. In den Brennraum 11 ragt ein Einspritzventil 10 einer Einspritzvorrichtung 4, die zentrisch zum Brennraum 11 im Zylinderkopfboden 3 angeordnet ist. Die Einspritzvorrichtung 4 ist Teil eines Druckspeicher-Einspritzsystems, bei dem eine Kraftstoffpumpe 6 Kraftstoff aus einem Kraftstofftank 5 über eine Kraftstoffleitung 7 unter hohem Druck in einen Druckspeicher 17 (Common-Rail) fördert, der über eine Einspritzleitung 8 und ein Zumessventil 9 mit dem Einspritzventil 10 verbunden ist. In bekannter Weise regelt eine Steuereinheit 12 den Kraftstoffdruck im Druckspeicher 17, unabhängig von der Motordrehzahl, auf ein über Eingang 13 vorgegebenes Druckniveau von über 1000 bar durch entsprechende Ansteuerung der Kraftstoffpumpe 6 über die Signalleitung 16 aus. Gleichzeitig steuert die Steuereinheit 12 über die Ansteuerleitung 15 das Öffnungsverhalten des Zumessventils 9 und darüber den Einspritzvorgang. Alternativ zu dem Druckspeicher-Einspritzsystem können auch andere Hochdruck-Einspritzsysteme mit ausreichender hydraulischer Leistungsfähigkeit, wie z.B. ein Pumpe-Düse-Einspritzsystem, zur Dieselgemischbildung verwendet werden.

Während der Einspritzphase, bei geöffnetem Zumessventil 9, wird bei dem dargestellten Ausführungsbeispiel der Kraftstoff über acht Einspritzbohrungen 23 des Einspritzventils 10 im wesentlichen radial und unter einem Spritzwinkel δ von 150 ° bis 170 °, hier 160 °, in den Brennraum 11 abgespritzt. Die Einspritzbohrungen 23 haben einen Durchmesser von 0,32 mm und bilden einen Strahlöffnungswinkel ε von 20 ° aus.

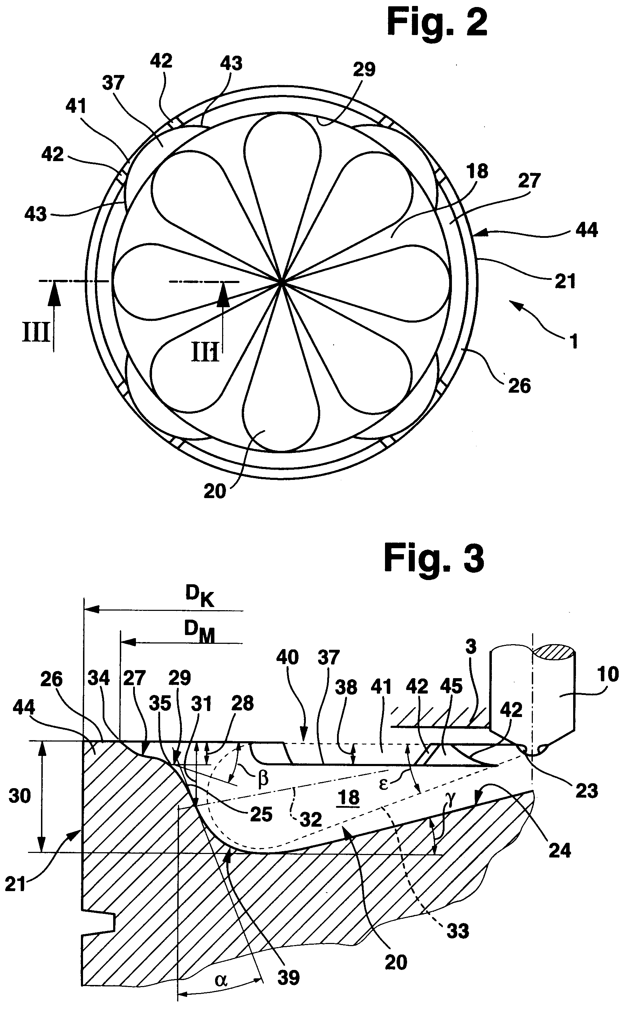

Der Kolbenboden 21 des in den Figuren 1 und 3 jeweils in oberer Totpunktstellung gezeigten Kolbens 1 bildet eine zentrisch angeordnete rotationssymmetrische offene Kolbenmulde 18 mit einer Eintrittsöffnung 40 aus, deren Durchmesser DM das 0,8-fache des Kolbendurchmessers DK beträgt. Umfangswand 25 und Muldengrund 24 der Kolbenmulde 18 sind an die durch den Spritzwinkel δ vorgegebene Lage und die Kontur 33 der bei maximaler Leistung des Einspritzsystems ausgebildeten Strahlkegel 20 derart angepaßt, daß in der oberen Totpunktstellung des Kolbens 1 eine Kollision der Strahlkeulen 20 sowohl mit der Umfangswand 25 als auch dem Muldengrund 24 vermieden wird. Dazu ist der Muldengrund 24 kegelförmig ausgebildet und steigt unter einem Neigungswinkel γ von 11 ° zur Kolbenmitte hin an. Radial nach außen geht der Muldengrund 24 im Bereich zwischen der maximalen Muldentiefe 30 und dem Abstand 31, wo die gedachten Strahlachsen 32 der Strahlkegel 20 die Umfangswand 25 der Kolbenmulde 18 schneiden, in die Umfangswand 25 über. Der Verlauf des Übergangsbereichs 29 ist exakt an die Kontur 33 der Einspritzkegel 20 angepaßt. Ausgegangen wird hierbei von einer Form der Einspritzstrahlen bzw. einer Kontur 33 der Einspritzkegel 20, wie sie sich in Abhängigkeit der hydraulischen Leistungsfähigkeit des Einspritzsystems durch Simulation aus den empirischen Formeln von Hiroyasu/Arai ergeben. Bei dem hier dargestellten Ausführungsbeispiel entspricht dies im Übergangsbereich 29 einem Radius von 13 mm. Aus dem gleichen Simulationsmodell für die Einspritzstrahlkontur 33 ergibt sich die maximale Muldentiefe 30 von hier 15,8 mm bei einem Einspritzdruck von 1200 bar und einem Verdichtungsverhältnis von ε = 14.

Die Umfangswand 25 ist konisch ausgebildet und weist einen Neigungswinkel α von etwa 15 ° bis 45 ° auf. In einem Abstand 28 unterhalb der Planfläche 26 des Kolbenbodens 21 geht die Umfangswand 25 in eine Diffusorausnehmung 27 über. Der Abstand 28 ist hier gleich der Tiefe 38 der weiter unten beschriebenen Ventiltaschen 37 gewählt. Grundsätzlich kann erje nach Ausbildung des Einspritzsystems, bzw. der durch obiges Simulationsmodell ermittelten Strahlkeulenform, auf einen Wert zwischen der Tiefe 38 der Ventiltaschen 37 und dem durch die Schnittebene der Strahlachse 32 definierten Abstand 31 festgelegt werden.

Die Diffusorausnehmung 27 ist am Muldenrand kreisförmig und koaxial zur Kolbenmulde 18 als konische Ausdrehung dargestellt. Sie schließt mit dem ebenen Zylinderkopfboden 3 einen Winkel β im Bereich von etwa 10 ° bis 30 ° ein. Die Ausbildung der Diffusorausnehmung 27 ist nicht auf die konische Ausdrehung beschränkt; vielmehr kann anstelle des linearen Anstiegs unter einem Winkel β jeder stetige Verlauf mit positiver Steigerung zur Planfläche 26 des Kolbenbodens 21 hin vorgesehen sein. Wesentlich dabei ist allerdings, daß der Übergang 29 von der Umfangswand 25 auf die Diffusorausnehmung 27 abgerundet ist, wobei der den Übergang bildende Radius 35 so gewählt ist, daß sich die in der Kolbenmulde 18 einstellende Festkörper-Drehströmung der Zylinderladung nicht von der Wand ablöst. Bei dem Ausführungsbeispiel wird dies mit einem Radius 35 von 4 min erreicht der grundsätzlich zwischen 4 mm und 15 mm variieren kann. Die Diffusorausnehmung 27 geht über einen Radius 34 in die Planfläche 26 des Kolbenbodens 21 über. Dieser Radius 34 beträgt zwischen 2 mm und 4 mm.

Wie Figur 2 zeigt, sind vier Ventiltaschen 30 symmetrisch verteilt im Bereich der erfindungsgemäßen Diffusorausnehmung 27 und der verbleibenden ringförmigen Planfläche 26 ausgebildet die aufgrund der erfindungsgemäßen Aufweitung und Gestaltung der Kolbenmulde 18 lediglich noch segmentförmige Grundflächen im Kolbenboden 21 annehmen. Die Tiefe 38 und Größe der Ventiltaschen 37 ist konstruktiv durch den erforderlichen Hub der Gaswechselventile und die Spaltbreite zwischen Kolbensteg 44 und dem Zylinderkopfboden 3 in oberer Totpunktstellung des Kolbens bestimmt. Die Ventiltaschen 37 bilden zusammen mit dem verbleibenden Kolbensteg 44 Verschneidungskanten 43 sowie dadurch festgelegte Schnittflächen 45 aus, deren Verlauf und Länge durch die Gestaltung der Diffusorausnehmung 27 bestimmt sind. Bei dem dargestellten Ausführungsbeispiel ist der Abstand 28 des Übergangs 29 zur Planfläche 26 des Kolbenbodens 21 gleich groß gewählt, wie die Tiefe 38 der Ventiltaschenausnehmung 27. Dadurch gehen die Ventiltaschen 37 harmonisch in den abgerundeten Übergang 29 über, was im Hinblick auf oben beschriebene Stömungsmechanik und thermische Beanspruchung Vorteile bietet.

Durchbrüche 41 im Kolbensteg 44 erhöhen die mechanische und thermische Standfestigkeit des Kolbenbodens 21 in Bereichen wo die Ventiltaschen 37 zu einer ausgeprägten Schwächung der Kolbenstegdicke führen. Die Durchbrüche 41 bilden in Umfangsrichtung Anfasungen 42 aus, um einerseits die thermische Standfestigkeit des Kolbenstegs 44 zu gewährleisten andererseits der einströmenden Ladeluft möglichst geringen Strömungswiderstand zu bieten. Aus gleichen Gründen sind auch sämtliche verbleibenden Kanten und/oder Stufen abgerundet.

### Bezugszeichenliste:

- 1.: Kolben
- 2.: Zylinder
- 3.: Zylinderkopfboden
- 4.: Einspritzvorrichtung
- 5.: Kraftstofftank
- 6.: Kraftstoffpumpe
- 7.: Kraftstoffleitung
- 8.: Einspritzleitung
- 9.: Zumeßventil
- 10.: Einspritzventil
- 11.: Brennraum
- 12.: Einspritzstauleitung
- 13.: Eingang
- 14.: Eingang
- 15.: Ansteuerleitung
- 16.: Signalleitung
- 17.: Druckspeicher
- 18.: Kolbenmulde
- 19.: Einspritzstrahl
- 20.: Strahlkegel
- 21.: Kolbenboden
- 22.: Gaswechselventil
- 23.: Einspritzbohrung
- 24.: Muldengrund
- 25.: Umfangswand
- 26.: Planfläche
- 27.: Diffusorausnehmung
- 28.: Abstand
- 29.: Übergang
- 30.: Muldentiefe
- 31.: Abstand
- 32.: Strahlachsen
- 33.: Kontur
- 34.: Radius
- 35.: Radius
- 36.: Gaswechselventil
- 37.: Ventiltaschen-Ausnehmung
- 38.: Tiefe Ventiltasehe
- 39.: Übergangsbereich
- 40.: Eintrittsöffnung
- 41.: Durchbruch
- 42.: Anfasung
- 43.: Verschneidungskante
- 44.: Kolbenstellung
- 45.: Schnittfläche
- α: Winkel, Umfangswand
- β: Winkel, Diffusorausnehmung
- γ: Winkel, Muldengrund
- δ: Spritzwinkel
- ε: Strahlöffnungswinkel

## Patentansprüche

1. Dieselmotor mit drallarmer luftverteilender Direkteinspritzung und mit einem flach ausgebildeten Brennraum (11), der von einem Zylinder (2), einem Zylinderkopfboden (3) und einem Kolbenboden (21) begrenzt ist, wobei im Kolbenboden (21) eine kreisförmige offene Kolbenmulde (18), deren Durchmesser (DM) mindestens dem 0,8-fachen des Kolbendurchmessers (DM) entspricht und die eine Umfangswand (25) und einen Muldengrund (24) ausbildet, sowie einer zentrisch zur Kolbenmulde (18) angeordneten, von einer Kraftstoffpumpe (6), insbesondere über einen Druckspeicher (17), unter hohem Druck mit Kraftstoff versorgten Einspritzvorrichtung (4), durch deren Einspritzöffnungsgeometrie (23) Kraftstoff in mehreren Strahlkegeln (20) im wesentlichen radial abgespritzt wird, wobei die Strahlachsen (32) der Strahlkegel (20) die Kolbenmulde (18) etwa in einer Schnittebene unterhalb der Planfläche (26) des Kolbenbodens treffen, *dadurch gekennzeichnet*, daß der Kolbenboden (21) eine vom Muldengrund (24) aus zur Planfläche (26) des Kolbenbodens hin divergent verlaufende Kolbenmulde (18) ausbildet, wobei am Muldenrand eine zur Kolbenmulde (18) koaxial angeordnete, kreisringförmige Diffusorausnehmung (27) vorgesehen ist, die ausgehend von einem im Abstand (28) unterhalb der Planfläche (26) des Kolbenbodens (21) ausgebildeten abgerundeten Übergang (29) der Umfangswand (25) mit zunehmendem Muldendurchmesser (DM) zur Planfläche (26) des Kolbenbodens hin ansteigt.

2. Dieselmotor nach Anspruch 1, *dadurch gekennzeichnet*, daß die Kolbenmulde (18) derart an die Lage (δ) und die Konturen (33) der Strahlkegel (20) bei maximaler Leistung des Einspritzsystems angepaßt ist, daß in der oberen Totpunktlage des Kolbens (1) ein Benetzen der Kolbenmulde (18) mit Kraftstoff vermieden wird, wobei mindestens die Umfangswand (25) der Kolbenmulde (18) im Bereich zwischen der maximalen Muldentiefe (30) und dem Abstand (31) der Schnittebene der Stahlachsen (32) an die Kontur (33) der Einspritzkegel (20) angepaßt ist.

3. Dieselmotor nach Anspruch 1, *dadurch gekennzeichnet*, daß der den Übergang (29) von der Umfangswand (25) der Kolbenmulde (18) auf die Diffusorausnehmung (27) bildende Radius (35) einen Wert im Bereich von 4 mm bis 15 mm beträgt.

4. Dieselmotor nach Anspruch 1, *dadurch gekennzeichnet*, daß die Kolbenmulde (18) eine konische Umfangswand (25) aufweist, die mit einem Neigungswinkel (α) von etwa 15 bis 45 °.

5. Dieselmotor nach Anspruch 1, *dadurch gekennzeichnet*, daß die Diffusorausnehmung (27) in Form einer konischen Ausdrehung ausgebildet ist, die mit dem Zylinderkopfboden (3) einen Winkel (β) von etwa 10 bis 30 ° bildet.

6. Dieselmotor nach Anspruch 1, *dadurch gekennzeichnet*, daß die Diffusorausnehmung (27) in einem Radius (34) von 2 mm bis 4 mm in die Planfläche (26) des Kolbenbodens übergeht.

7. Dieselmotor nach Anspruch 1, *dadurch gekennzeichnet*, daß der Abstand (28) des Übergangs (29) unterhalb der Planfläche (26) des Kolbenbodens kleiner oder gleich dem Abstand (31) der Schnittebene der Strahlachsen (32) der Strahlkegel (20) und der Kolbenmulde (18) ist.

8. Dieselmotor nach Anspruch 1 oder 7, *dadurch gekennzeichnet*, daß mindestens eine einem Gaswechselventil (22) zugeordnete Ventiltaschen-Ausnehmung (37) im Kolbenboden (21) ausgebildet ist, und daß der durch einen Radius (35) gebildete Übergang (29) der Kolbenmuldenumfangswand (25) in die Diffusorausnehmung (27) in einem Abstand (28) zur Planfläche (26) des Kolbenbodens (21) ausgebildet ist, der gleich oder größer der Tiefe (38) der Ventiltaschen-Ausnehmung (37) ist.

9. Dieselmotor nach Anspruch 1, *dadurch gekennzeichnet*, daß die Einspritzöffnungsgeometrie der Einspritzvorrichtung (4) einen Spritzwinkel (δ) von 150 bis 170 ° aufweist.

10. Dieselmotor nach einem oder mehreren der Ansprüche 1 bis 9, *dadurch gekennzeichnet*, daß ein Druckspeicher-Einspritzsystem mit elektronischer Einspritzsteuerung vorgesehen ist.
